# EUROPÄISCHE PATENTSCHRIFT

(11) **EP 0 700 605 B1**
(45) Veröffentlichungstag und Bekanntmachung des Hinweises auf die Patenterteilung: **05.08.1998**
(21) Anmeldenummer: 94916947.8
(22) Anmeldetag: 10.05.1994
(51) Int. Cl.: H04B 10/00, H04L 1/22

(54) **VERFAHREN ZUR ERSATZSCHALTUNG FÜR EINE ÜBERTRAGUNGSEINRICHTUNG ZUR BIDIREKTIONALEN ÜBERTRAGUNG VON DIGITALSIGNALEN UND ANORDNUNG ZUR DURCHFÜHRUNG DES VERFAHRENS**
EQUIVALENT CIRCUIT PROCESS FOR A TRANSMISSION DEVICE FOR THE BIDIRECTIONAL TRANSMISSION OF DIGITAL SIGNALS AND ARRANGEMENT FOR IMPLEMENTING THE PROCESS
PROCEDE PERMETTANT DE REALISER UN CIRCUIT EQUIVALENT POUR UN DISPOSITIF DE TRANSMISSION DESTINE A LA TRANSMISSION BIDIRECTIONNELLE DE SIGNAUX NUMERIQUES ET CONFIGURATION DE MISE EN OEUVRE DUDIT PROCEDE

(30) Priorität: 28.05.1993 EP 93108706
(43) Veröffentlichungstag der Anmeldung: 13.03.1996
(73) Patentinhaber: SIEMENS AKTIENGESELLSCHAFT, 80333 München (DE)
(72) Erfinder: KLINK, Joachim, D-81639 München (DE)
(86) Internationale Anmeldenummer: EP9401505
(87) Internationale Veröffentlichungsnummer: WO9428646

(56) Entgegenhaltungen:
- EP-A- 0 483 790
- EP-A- 0 507 379
- EP-A- 0 533 167
- GB-A- 2 233 851

## Beschreibung

Die Erfindung bezieht sich auf eine wie im Oberbegriff des Patentanspruchs 1 angegebenes Verfahren zur Ersatzschaltung für eine Übertragungseinrichtung zur bidirektionalen Übertragung von Digitalsignalen und eine Anordnung zur Durchführung des Verfahrens.

Ein derartiges Verfahren bzw. eine derartige Ersatzschalteinrichtung ist bereits aus der CCITT-Empfehlung G.783, Genf 1990, ANNEX A bekannt.

Die bekannte Ersatzschalteinrichtung ist für eine Übertragungseinrichtung zur bidirektionalen Übertragung von Digitalsignalen vorgesehen, bei der zwei Endstellen über eine Betriebsstrecke und eine Ersatzstrecke miteinander verbunden sind. Die beiden Endstellen enthalten jeweils eine Überwachungsvorrichtung zur Feststellung von Übertragungsstörungen. Eine durch die Uberwachungsvorrichtung steuerbare Schaltvorrichtung verbindet eine Empfangsvorrichtung in einem ersten Schaltzustand mit der Betriebsstrecke und in einem zweiten Schaltzustand mit der Ersatzstrecke. Zwischen den Steuervorrichtungen der beiden Endstellen werden Steuerinformationen erster und zweiter Art ausgetauscht. Die Schaltvorrichtung wird jeweils durch die örtliche Überwachungsvorrichtung in Abhängigkeit von örtlichen und in den von der Gegenstelle empfangenen Steuerinformationen enthaltenen Steuerkriterien gesteuert.

Eines der Verfahren nach der CCITT-Empfehlung G.783, Annex A bezieht sich auf Übertragungseinrichtungen der synchronen digitalen Hierarchie SDH und verwendet die K1- und K2-Bytes des Section Overhead dazu, den Schaltvorgang bidirektional zwischen den beiden Endstellen zu koordinieren. Um einen Schaltvorgang abzuschließen, müssen dabei dreimal hintereinander veränderte K1- und/oder K2-Bytes zwischen beiden Endstellen übertragen werden.

Ferner ist in der genannten Empfehlung eine Variante einer bidirektionalen Umschaltung beschrieben, die einen nur zweimaligen Austausch von K1-und K2-Bytes vorsieht.

Aus der europäischen Offenlegungsschrift 0 533 167 ist ein optisches Kommunikationssystem mit Durchschaltevermittlung bekannt. Aus der europäischen Offenlegungsschrift 0 507 379 ist eine Schutzvorrichtung für eine optische Übertragungseinrichtung bekannt.

Aufgabe der Erfindung ist es, das Verfahren bzw. die Ersatzschalteinrichtung der eingangs genannten Art derart auszubilden, daß die bidirektionale Streckenersatzschaltung möglichst schnell erfolgt. Insbesondere soll die Ersatzschalteinrichtung für Leitungsausrüstungen der synchronen digitalen Hierarchie mit einer 1+1- oder 1:1- Anordnung geeignet sein, wobei das gleiche Nutzsignal in einer 1+1-Anordnung über die Betriebs- und die Ersatzstrecke und in einer 1:1-Anordnung über die Betriebs- oder die Ersatzstrecke von einer Endstelle zur anderen übertragen wird.

Bei der bekannten Umschaltung läßt sich mit Hilfe einer Folge von mehreren Schritten erreichen, daß die Schaltvorrichtungen beider Übertragungsrichtungen nach Beendigung der Schrittfolge einander entsprechen.

Der Erfindung liegt die Erkenntnis zugrunde, daß sich die durchschnittliche Dauer der bidirektionalen Ersatzschaltung dadurch wesentlich verkürzen läßt, daß eine beidseitige Umschaltung mit nur einer einzigen Informations übertragung vorgesehen wird, bei der in Ausnahmefällen Fehlschaltungen vorkommen können und daß eine derartige Fehlschaltung gegebenenfalls in einer ebenfalls einfach realisierbaren Korrekturphase behoben wird.

Gemäß der Erfindung wird das Verfahren der eingangs genannten Art zur Lösung der gestellten Aufgabe in der im kennzeichnenden Teil des Patentanspruchs 1 angegebenen Weise ausgebildet. Dabei wird in beiden Endstellen jeweils von den örtlichen Schaltanforderungen und der entfernten Gegenstelle empfangenen Schaltanforderungen die mit der höchsten Priorität ausgewählt. Örtliche und empfangene Schaltanforderungen werden gleichwertig behandelt. Die so ausgewählte Schaltanforderung bestimmt unmittelbar, d.h. ohne weiteren Informationsaustausch mit der Gegenstelle, die Steuerung der Schaltvorrichtung.

Durch die erfindungsgemäßen Maßnahmen ergibt sich der Vorteil, daß die Betätigung der Schaltvorrichtungen in den beiden Endstellen im Regelfall mit einer nur einmaligen Übertragung von Steuerinformationen zwischen den beiden Endstellen auskommt. Damit wird der Ersatzschaltvorgang für beide Übertragungsrichtungen der bidirektionalen Nachrichtenübertragung normalerweise sehr schnell abgeschlossen.

Bei Feststellung einer empfangsseitigen Übertragungsstörung in einer der beiden Endstellen schaltet diese Endstelle sofort um, informiert die Gegenstelle mit Hilfe der Steuerinformation erster und zweiter Art und diese Gegenstelle schaltet nach.

Dabei wird bewußt in Kauf genommen, daß in bestimmten Ausnahmefällen Fehlschaltungen auftreten können, bei denen die Schalterstellungen in beiden Endstellen unterschiedlich sind. Dies ist z.B. der Fall, wenn in beiden Endstellen quasi gleichzeitig lokale Ersatzschalteanforderungen gleicher Priorität aber für unterschiedliche Strecken auftreten.

Diese Fehlschaltungen werden auf einfache Weise erkannt und behoben. Die Stellungen der Schaltvorrichtungen in den beiden Endstellen werden dann auf einfach realisierbare Weise und schnell selbsttätig aneinander angepaßt.

Eine zweckmäßige Ersatzschalteinrichtung zur Durchführung des Verfahrens nach Anspruch 1 geht aus Anspruch 2 hervor.

Im Falle einer 1 + 1 - Umschaltung, bei der die Sendevorrichtung die zu übertragenden Digitalsignale ständig an die Betriebsstrecke und die Ersatzstrecke abgibt, reicht die empfangsseitige Umschaltevorrichtung aus.

Im Falle einer 1 : 1 - Umschaltung, bei der das Nutzsignal über die Betriebs- oder die Ersatzstrecke zur Empfangsvorrichtung übertragen wird, wird die Umschalteeinrichtung zweckmäßigerweise entsprechend Anspruch 3 ausgebildet.

Die Maßnahmen nach Anspruch 4 ermöglichen es, die Ersatzstrecke zur Übertragung zusätzlicher Nutzsignale zu verwenden, wenn sie nicht als Ersatz für die Betriebsstrecke 21 benötigt wird.

Zweckmäßige weitere Ausgestaltungen der Erfindung gehen aus den Ansprüchen 5 bis 10 hervor.

Die Erfindung wird anhand der in den Figuren dargestellten Ausführungsbeispiele näher erläutert.

Es zeigen
- Fig. 1: eine Ersatzschalteinrichtung mit einer Betriebsstrecke und einer Ersatzstrecke für 1 + 1 - Umschaltung,
- Fig. 2: eine Ersatzschalteinrichtung mit einer Betriebsstrecke und einer Ersatzstrecke für 1 : 1 - Umschaltung mit wahlweiser Übertragung von Nutzsignalen oder weiteren Nutzsignalen über die Ersatzstrecke und
- Fig. 3: eine Umschalteeinrichtung für 1 : 1 - Umschaltung nach Fig. 2 mit Übertragung weiterer Nutzsignale wahlweise über die Ersatz- oder die Betriebsstrecke.

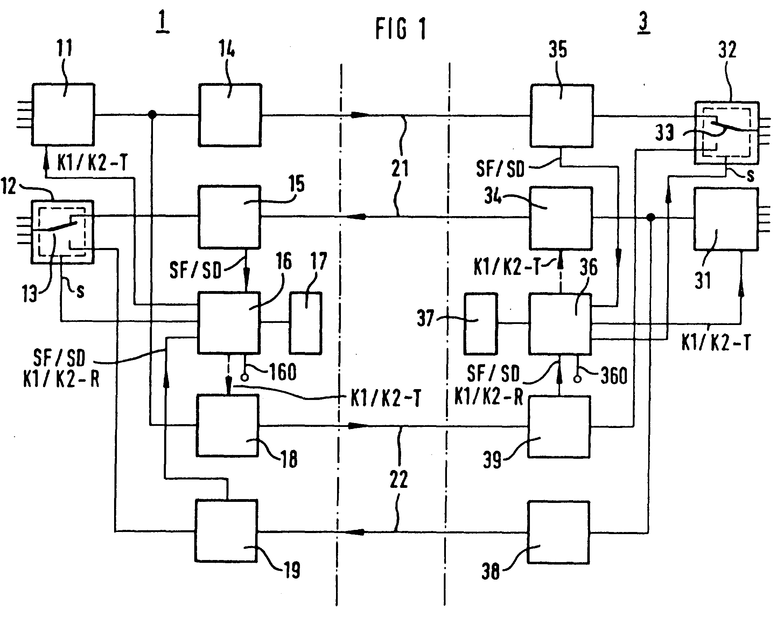

Figur 1 zeigt eine Ersatzschalteinrichtung für eine Ubertragungseinrichtung zur bidirektionalen Übertragung von Digitalsignalen.

Die beiden Endstellen 1 und 3 eines Übertragungsabschnittes enthalten jeweils als Sendevorrichtung den Multiplexer 11 bzw. 31 und als Empfangsvorrichtung den Demultiplexer 12 bzw. 32. Die Endstellen 1 und 3 sind über die Betriebsstrecke 21 und die Ersatzstrecke 22 miteinander verbunden.

Der Multiplexer 11 gibt als Datenquelle bzw. Sendevorrichtung die zu übertragenden Digitalsignale ständig sowohl an den optischen Sender 14 der Betriebsstrecke 21 als auch an den optischen Sender 18 der Ersatzstrecke 22 ab.

Der im Demultiplexer 12 enthaltene Umschalter 13 verbindet die weiteren Schaltmittel des Demultiplexers 12 , die eine Datensenke bzw. Empfangsvorrichtung bilden, wahlweise mit dem optischen Empfänger 15 der Betriebsstrecke 21 oder dem optischen Empfänger 19 der Ersatzstrecke 22.

Die Endstellen 1 und 3 enthalten ferner jeweils eine zentrale Überwachungsvorrichtung 16 bzw. 36. Die zentrale Überwachungsvorrichtung 16 ist mit dem Multiplexer 11 und den optischen Empfängern 15 und 19 verbunden, empfängt von der Bedienvorrichtung 17 gegebenenfalls Steuerinformationen und steuert ihrerseits den Umschalter 13 mit Hilfe von Steuersignalen s.

Die zentrale Überwachungsvorrichtung 16 erhält vom optischen Empfänger 19 der Ersatzstrecke 22 Informationen über die empfangenen K1- bzw. K2-Bytes (K1/K2-R) und von den optischen Empfängern 15 und 19 jeweils Informationen über den Zustand (SF/SD) der zum betreffenden Empfänger führenden Strecke 21 bzw. 22. Solche Informationen melden insbesondere eine verminderte Übertragungsqualität oder einen Ausfall der betreffenden Strecke. Außerdem gibt die Überwachungsvorrichtung 16 an den Multiplexer 11 Informationen über die vom Multiplexer 11 auszusendenden K1- und K2-Bytes ab.

In der Endstelle 1 verbindet die durch die Überwachungsvorrichtung 16 steuerbare Schaltvorrichtung 13, die ein Umschalter ist, in einem ersten Schaltzustand, und zwar im Ruhezustand die weiteren Funktionsteile des Demultiplexers 12 mit der Betriebsstrecke 21 und in einem zweiten, aktivierten Schaltzustand mit der Ersatzstrecke 22.

In der Endstelle 3 verbindet die durch die Überwachungsvorrichtung 36 steuerbare Schaltvorrichtung 33, die ein Umschalter ist, in einem ersten Schaltzustand bzw. Ruhezustand die weiteren Funktionsteile des Demultiplexers 32 mit der Betriebsstrecke 21 und in einem zweiten, aktivierten Schaltzustand mit der Ersatzstrecke 22.

Zwischen den Überwachungsvorrichtungen 16 und 36 der beiden Endstellen 1 und 3 werden über einen systemeigenen Steuerkanal Steuerinformationen K1, K2 erster und zweiter Art ausgetauscht. Der Umschalter 13, 33 wird jeweils durch die örtliche Überwachungsvorrichtung 16, 36 in Abhängigkeit von örtlichen und in den von der Gegenstelle empfangenen Steuerinformationen enthaltenen Steuerkriterien derart gesteuert, daß die zu übertragenden Digitalsignale wahlweise über die Betriebsstrecke 21 oder die Ersatzstrecke 22 zur Empfangsvorrichtung bzw. zu den weiteren Funktionsteilen des Demultiplexers 12 bzw. 32 gelangen.

Die Steuerinformation K1 erster Art enthält eine Information über die örtlichen Steuerkriterien. Die Steuerinformation K2 zweiter Art enthält eine Information über den Zustand des örtlichen Umschalters 13 bzw. 33.

Der Umschalter 13 bzw. 33 wird jeweils durch ein Steuersignal gesteuert, das aus den örtlichen Steuerkriterien und aus den in der Steuerinformation K1 erster Art enthaltenen Steuerkriterien abgeleitet ist. Die Übertragungseinrichtung 16, 36 überführt bei Nichtübereinstimmung von örtlich gebildeter und empfangener Steuerinformation K2 zweiter Art und im zweiten Zustand befindlichem Umschalter 13, 33 den Umschalter 13, 33 in den ersten Ruhezustand.

Entsprechend Fig. 1 veranlaßt die zentrale Überwachungsvorrichtung 16 den Multiplexer 11, entsprechende K1-Bytes und K2-Bytes auszusenden (K1/K2-T). Alternativ kann anstelle des Multiplexers 11 der optische Sender die Kl-Bytes und K2-Bytes aussenden.

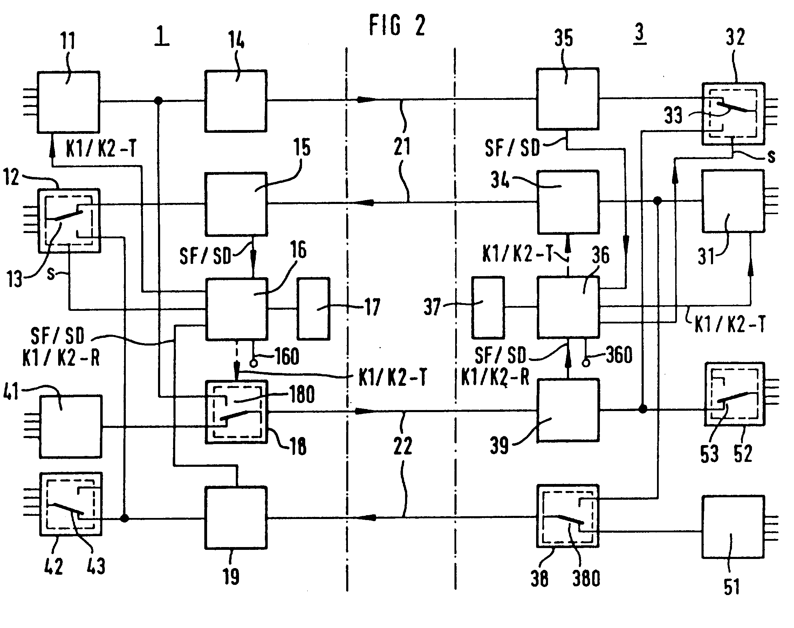

Die Umschalteinrichtung nach Fig. 2 stimmt mit der nach Fig. 1 weitgehend überein. Der Unterschied besteht darin, daß die Ersatzstrecke 22 einer weiteren Übertragungsein richtung zur Verfügung steht, falls die Ersatzstrecke 22 nicht als Ersatz für die Betriebsstrecke 21 benötigt wird.

Die weitere Übertragungseinrichtung weist in der Endstelle 1 den Multiplexer 41 und den Demultiplexer 42, in der Endstelle 3 den Multiplexer 51 und den Demultiplexer 52 auf. Der optische Sender 18 bzw. 38 der Ersatzstrecke 22 ist jeweils an seinem Eingang mit einem Umschalter 180 bzw. 380 versehen. Mit Hilfe dieses Umschalters 180 bzw. 380 werden die weiteren Funktionsteile des optischen Senders 18 bzw. 38 wahlweise mit dem Multiplexer 11 bzw. 31 oder dem Multiplexer 41 bzw. 51 verbunden. Der Demultiplexer 42 bzw. 52 läßt sich mit Hilfe eines Schalters 43 bzw. 53 wahlweise mit dem optischen Empfänger 19 bzw. 39 der Ersatzstrecke 22 verbinden. Die drei Schalter 13, 180 und 43 einerseits und 33, 380 und 53 andererseits werden jeweils durch die betreffende Überwachungsvorrichtung 16 bzw. 36 synchron gesteuert.

Die Ersatzschalteinrichtung nach Fig. 2 gestattet es, über die Ersatzstrecke 2 weitere Digitalsignale zu übertragen, solange die Ersatzstrecke 22 nicht als Ersatz für die Betriebsstrecke 21 benötigt wird.

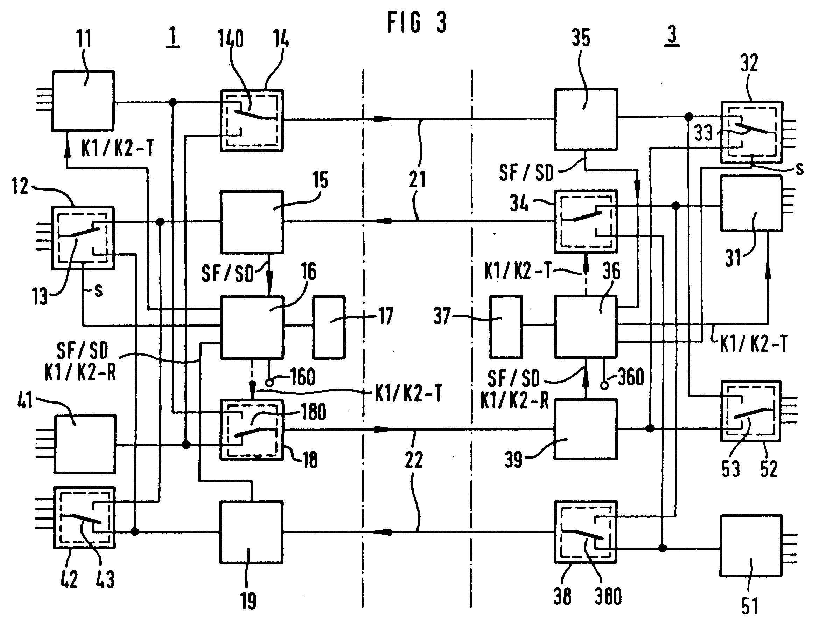

Die Ersatzschalteinrichtung nach Fig. 3 stimmt mit der nach Fig. 2 weitgehend überein. Die einzige Abweichung besteht darin, daß der optische Sender 14 bzw. 34 der Betriebsstrecke 21 an seinem Eingang den Umschalter 140 aufweist und sich mit Hilfe dieses Umschalters 140 wahlweise mit dem Multiplexer 11 bzw. 31 der Betriebsstrecke 21 oder dem Ausgang des Multiplexers 41 bzw. 51 der Ersatzstrecke 22 verbinden läßt und daß der Demultiplexer 42 bzw. 52 eingangsseitig mit Hilfe des Umschalters 43 bzw. 53 wahlweise mit dem optischen Empfänger 19 bzw. 39 oder dem optischen Empfänger 15 bzw. 35 verbunden wird, wobei die Umschalter 140, 13, 180 und 340, 43, 380 der Betriebsstelle 1 einerseits und die Umschalter 340, 33 der Betriebsstelle 3 andererseits jeweils durch die Überwachungsvorrichtung 16 bzw. 36 gemeinsam steuerbar sind.

Auf diese Weise wird erreicht, daß sich im Ersatzschaltfall zusätzliche Nutzsignale über die Betriebsstrecke 21 übertragen lassen.

Die Übertragungseinrichtung zur bidirektionalen Übertragung von Digitalsignalen ist insbesondere eine Übertragungseinrichtung der synchronen digitalen Hierarchie, wie sie aus den CCITT-Empfehlungen G.707 bis G.709 bekannt ist. In diesem Fall wird die Steuerinformation erster Art als Kl-Byte und die Steuerinformation zweiter Art als K2-Byte des Overhead übertragen. Das K1-Byte und das K2-Byte werden dabei in jedem Signalrahmen, d.h. in zeitlichem Abstand von 125 µsec übertragen.

Die Übertragungseinrichtung zur bidirektionalen Übertragung von Digitalsignalen enthält somit jeweils sendeseitig eine Vorrichtung zum periodischen Aussenden der Steuerinformation K1, K2 erster und zweiter Art. Empfangsseitig wandelt die Überwachungsvorrichtung 16 bzw. 36 die periodisch empfangene Steuerinformation in Dauersignale um.

Die Überwachungsvorrichtung 16, 36 gibt am Meldeausgang 160 bzw. 360 bei Nichtübereinstimmung von örtlich gebildeter und empfangener Steuerinformation K2 zweiter Art und im zweiten Zustand befindlicher Umschalter 13, 33 nach Ablauf einer vorgegebenen Wartezeit eine Meldung über die festgestellte Fehlschaltung ab. Die vorgegebene Wartezeit beträgt vorzugsweise etwa eine Sekunde.

Die ersten vier Bits des K1-Bytes enthalten eine Information über den Zustand der Übertragungsstrecke, den Betriebszustand der Ersatzschaltvorrichtung oder externe Steuerbefehle.

Das ausgesendete K1-Byte gibt immer nur die örtliche Schaltanforderung an. Daher wird im K1-Byte keine "Rückanforderung" angegeben.

Die ersten vier Bits des K2-Bytes geben den Status des Umschalters 13 bzw. 33 an. Dabei wird die Nummer der Strecke angegeben, die über den Umschalter 13 bzw. 33 mit dem Demultiplexer 12 verbunden ist.

Die ersten vier Bits lauten "0001", wenn sich der Umschalter 13 bzw. 33 in der Ruhelage befindet und "0000", wenn der Umschalter 13 bzw. 33 aktiviert ist, so daß der Demultiplexer Nutzsignale von der Ersatzstrecke 22 empfängt.

Der Umschalter wird durch die Anforderung gesteuert, die die höchste Priorität aufweist. Dies kann eine örtliche Anforderung oder eine entfernte, über das K1-Byte empfangene Anforderung der Gegenstelle sein. Bestimmt in einer der Endstellen 1 und 3 eine Schaltanforderung bestimmter Priorität die Position des Umschalters und kommt z.B. von der Gegenstelle eine weitere Schaltanforderung gleicher Priorität hinzu, so ändert dies die Position des Umschalters nicht.

Wird der Umschalter aufgrund einer örtlichen oder entfernten Aufforderung aktiviert, um Nutzsignale vom Ersatzkanal zu empfangen, aber das empfangene K2-Byte zeigt für mehr als eine vorgegebene Wartezeit von vorzugsweise etwa einer Sekunde an, daß der Umschalter am entfernten Ende in Ruhestellung ist, wird der Umschalter in Ruhestellung gebracht und am Meldeausgang 160 bzw. 360 Nichtübereinstimmung angezeigt. Der Zustand der Nichtübereinstimmung endet, sobald der örtliche bzw. entfernte Wunsch nach Umschaltung auf die Ersatzstrecke aufgehoben wird oder sobald der Umschalter des fernen Endes aktiviert wird. Befindet sich die Ersatzstrecke im Zustand "Signalausfall", wird der Umschalter in Ruhestellung gebracht und die Anzeige der Nichtübereinstimmung aufgehoben.

Die folgende Tabelle zeigt ein Beispiel für den Ersatzschaltvorgang für eine bidirektionale 1 + 1 - Umschaltung im nicht zurückschaltenden Modus.

Die Tabelle zeigt die K1- und K2-Bytes, die in Richtung 3 nach 1 von der Endstelle 3 zur Endstelle 1 und in Richtung 1 nach 3 von der Endstelle 1 zur Endstelle 3 übertragen werden. Ein "x" gibt jeweils an, daß das betreffende Bit für anderweitige Nutzung zur Verfügung steht. Das fünfte Bit des K2-Bytes ist immer auf "0" gesetzt, um anzuzeigen, daß es sich um eine 1 + 1 - Ersatzschaltung handelt.

| | Richtung 3, 1 | | Richtung 1, 3 | |
|---|---|---|---|---|
| | Byte K1 | Byte K2 | Byte K1 | Byte K2 |
| Schritt | | | | |
| 1 | 00000000 | 00010xxx | 00000000 | 00010xxx |
| 2 | 11010001 | 00000xxx | 00000000 | 00010xxx |
| 3 | 11010001 | 00000xxx | 00010001 | 00000xxx |
| 4 | 00010001 | 00000xxx | 00010001 | 00000xxx |
| 5 | 10110000 | 00010xxx | 00010001 | 00000xxx |
| 6 | 10110000 | 00010xxx | 00000000 | 00010xxx |
| 7 | 00000000 | 00010xxx | 00000000 | 00010xxx |

Der Tabelle liegt folgender Ablauf zugrunde.

### Schritt 1:

Betriebs- und Ersatzstrecke 21 und 22 sind in Ordnung. Ersatzstrecke ist nicht in Gebrauch. In den Endstellen 1 und 3 verbindet der Umschalter 13 bzw. 33 jeweils den Demultiplexer 12 bzw. 33 mit dem optischen Empfänger 15 bzw. 35 der Betriebsstrecke 21.

### Schritt 2:

Die Betriebsstrecke 21 ist in Richtung von Endstelle 1 nach Endstelle 3 ausgefallen. Dies löst in Endstelle 3 eine örtliche Umschalteanforderung aus und der Umschalter 33 wird aktiviert, so daß er den optischen Empfänger 39 mit dem Demultiplexer 32 verbindet. Die zentrale Überwachungsvorrichtung 36 veranlaßt den Multiplexer 31, Digitalsignale mit aktualisierten Kl-Bytes und K2-Bytes abzugeben.

### Schritt 3:

In Endstelle 1 wird die Umschalteanforderung der Gegenstelle 3 empfangen. Die zentrale Überwachungsvorrichtung 16 aktiviert den Umschalter 13, so daß dieser den optischen Empfänger 19 der Ersatzstrecke 22 mit dem Demultiplexer 12 verbindet. Außerdem veranlaßt die zentrale Überwachungsvorrichtung 16 den Multiplexer 11, Digitalsignale mit aktualisierten K1-Bytes und K2-Bytes abzugeben.

### Schritt 4:

Die Betriebsstrecke ist repariert. In Endstelle 3 wird die örtliche Umschalteanforderung gelöscht und durch die Vorgabe "keine Rückschaltung auf die Betriebsstrecke" ersetzt. Die Endstelle 3 sendet aktualisierte K1-Bytes.

### Schritt 5:

Die Ersatzstrecke weist in Richtung von Endstelle 1 nach Endstelle 3 eine verminderte Übertragungsqualität auf. Dies löst in Endstelle 3 eine örtliche Umschalteanforderung aus. Der Umschalter 33 wird in den Ruhezustand versetzt, in dem der optische Empfänger 35 der Betriebsstrecke 21 mit dem Demultiplexer 32 verbunden ist. Die Endstelle 3 sendet Digitalsignale mit aktualisierten K1-Bytes und K2-Bytes.

### Schritt 6:

In Endstelle 1 wird die Umschalteanforderung der Gegenstelle 3 festgestellt. Der Umschalter 13 wird in den Ruhezustand versetzt, in den der optische Empfänger 15 der Betriebsstrecke 21 mit dem Demultiplexer 12 verbunden ist. Die K1-Bytes und K2-Bytes der gesendeten Digitalsignale werden aktualisiert.

### Schritt 7:

Die Ersatzstrecke 22 ist repariert. In der Endstelle 3 liegt keine Umschalteanforderung mehr vor. Die zentrale Überwachungsvorrichtung 36 veranlaßt den Multiplexer 31, aktualisierte K1-Bytes abzugeben.

Die zentralen Überwachungsvorrichtungen 16 und 36 enthalten jeweils eine Ersatzschaltelogik. Die Ersatzschaltelogik jeder Endstelle 1 bzw. 3 bestimmt die aktive Anforderung mit der höchsten Priorität. Dies kann eine über das K1-Byte empfangene Anfordung der Gegenstelle oder eine örtliche Anforderung, insbesondere eine Information über den Zustand der Übertragungsstrecke, den Betriebszustand der Ersatzschaltvorrichtung oder ein externer Steuerbefehl sein. Die Ersatzschaltelogik setzt den Umschalter 13 bzw. 33 in Übereinstimmung mit der Anforderung, die die höchste Priorität hat. Die daraus resultierende Position des Umschalters 13 bzw. 33 in Übereinstimmung mit der Anforderung, die die höchste Priorität hat. Die daraus resultierende Position des Umschalters 13 bzw. 33 wird in den ersten vier Bits des ausgesendeten K2-Bytes angegeben. Für die Erzeugung des ausgesendeten K1 Bytes wird nur die lokale Anforderung mit der höchsten Priorität berücksichtigt. Anforderungen der Gegenstelle werden bei der K1-Byte-Erzeugung nicht berücksichtigt. Eine Quittierung von Anforderungen erfolgt nicht.

In dem in der Tabelle gezeigten Beispiel wird in der Endstelle 3 im Betriebskanal 21 eine Signalstörung festgestellt. Folglich aktiviert die Ersatzschaltelogik der Endstelle 3 den Umschalter 33 so, daß er Nutzsignale vom Ersatzkanal 22 empfängt. In der Endstelle 1 stellt die Ersatzschaltelogik über das empfangene K1 Byte den Fehler fest und aktiviert ebenfalls ihren Umschalter 13. Sie fügt "keine Rückschaltung" in das ausgesandte K1 Byte ein, da keine örtlichen Anforderungen wirksam sind.

Nach Reparatur des Betriebskanals 21 wird in der Endstelle 3 "keine Rückschaltung" angegeben und die Umschalter 13 und 33 der Endstelle 1 und 3 bleiben aktiviert. Die Einrichtung schaltet nicht zu einer bevorzugten Strecke zurück, wie es bei Rückschaltbetrieb der Fall ist. Die Vorgabe "keine Rückschaltung" wird beseitigt, falls dies durch eine örtliche Anforderung vorgegeben wird. Wird darauffolgend in der Endstelle 3 eine Signalstörung auf dem Ersatzweg 22 festgestellt, wird dies daher in der Endstelle 3 im ausgesendeten K1-Byte angegeben und der Umschalter 33 der Endstelle 3 wird in den Ruhezustand überführt. Die Umschaltlogik der Endstelle 1 stellt den Fehler über das empfangene K1-Byte fest und überführt ihren Umschalter 13 ebenfalls in den Ruhezustand.

Nach Reparatur der Ersatzstrecke 22 wird in beiden Endstellen 1 und 3 "keine Anforderung" angegeben.

Für den rückschaltenden Betrieb wird in der Endstelle 3 nach Reparatur der Betriebsstrecke anstelle von "keine Rückschaltung" "Warten auf Wiederherstellung" angegeben. Die Vorgabe "Warten auf Wiederherstellung" wird gelöscht und ein "Warten auf Wiederherstellung"-Timer deaktiviert, wenn dies durch eine örtliche Anforderung vorgegeben wird. Läuft der "Warten auf Wiederherstellung"-Timer ab, werden beide Umschalter 13 und 33 in den Ruhezustand überführt, um Nutzsignale von der Betriebsstrecke 21 zu empfangen. In beiden Endstellen wird "keine Anforderung" angegeben.

Das anhand von Fig. 1 erläuterte Ersatzschaltverfahren findet zweckmäßigerweise in der beschriebenen Weise auch für die 1 : 1 - Umschaltevorrichtungen nach Fig. 2 und Fig. 3 Verwendung, wobei die Schalter zusammen mit den Umschaltern derselben Endstelle gekoppelt sind und somit immer synchron mit dem Umschalter betätigt werden. Das fünfte Bit des K2-Bytes ist in diesem Fall immer auf "1" gesetzt.

Die folgende Tabelle zeigt ein weiteres Beispiel für die Funktion der Ersatzschalteinrichtung für 1 + 1 - Umschaltung nach Fig. 1.

| | Richtung 3, 1 | | Richtung 1, 3 | |
|---|---|---|---|---|
| | Byte K1 | Byte K2 | Byte K1 | Byte K2 |
| Schritt | | | | |
| 1 | 00000000 | 00010xxx | 00000000 | 00010xxx |
| 2 | 10110001 | 00000xxx | 00000000 | 00010xxx |
| 3 | 10110001 | 00000xxx | 00000000 | 00000xxx |
| 4 | 10110001 | 00000xxx | 11100001 | 00000xxx |
| 5 | 10110001 | 00000xxx | 11100001 | 00000xxx |
| 6 | 10110001 | 00000xxx | 11100001 | 00010xxx |
| 7 | 10110001 | 00010xxx | 11100001 | 00010xxx |
| 8 | 10110001 | 00010xxx | 11100001 | 00000xxx |
| 9 | 10110001 | 00000xxx | 11100001 | 00000xxx |
| 10 | 10110001 | 00000xxx | 01100001 | 00000xxx |
| 11 | 10110001 | 00000xxx | 00000000 | 00000xxx |
| 12 | 01100001 | 00000xxx | 00000000 | 00000xxx |
| 13 | 00000000 | 00010xxx | 00000000 | 00000xxx |
| 14 | 00000000 | 00010xxx | 00000000 | 00010xxx |

Der in der Tabelle gezeigten Schrittfolge liegt folgender Ablauf zugrunde.

### Schritt 1:

Es herrscht fehlerfreier Betrieb. Die Ersatzstrecke 22 ist nicht in Gebrauch. In den Endstellen 1 und 3 befindet sich der Umschalter 13 bzw. 33 jeweils im Ruhezustand.

### Schritt 2:

Die Betriebsstrecke weist in Richtung Endstelle 1 nach Endstelle 3 eine verminderte Übertragungsqualität auf. Dies löst in der Endstelle 3 eine örtliche Umschalteanforderung aus. Der Umschalter 33 der Endstelle 3 wird aktiviert. Die zentrale Überwachungsvorrichtung 36 veranlaßt den Multiplexer 31, aktualisierte K1-Bytes und K2-Bytes abzugeben.

### Schritt 3:

In der Endstelle 1 wird die Umschalteanforderung der Gegenstelle 3 festgestellt. Der Umschalter 13 wird aktiviert. Die zentrale Überwachungsvorrichtung 16 aktualisiert das K2-Byte.

### Schritt 4:

In der Endstelle 1 wird eine Zwangsumschaltung für die Betriebsstrecke vorgegeben. Die Überwachungsvorrichtung 16 stellt die höhere Priorität der örtlichen Anforderung fest. Die Position des Umschalters 13 wird beibehalten. Das K1-Byte wird aktualisiert.

### Schritt 5:

In der Endstelle 3 wird die höhere Priorität der fernen Anforderung festgestellt. Die Position des Umschalters 33 wird beibehalten.

### Schritt 6:

Die Ersatzstrecke ist in Richtung von Endstelle 3 nach Endstelle 1 ausgefallen. Die Endstelle 1 stellt dies fest und überführt den Umschalter 13 in seine Ruhestellung. Das K2-Byte wird aktualisiert. Das K1-Byte bleibt unverändert.

### Schritt 7:

In Endstelle 3 wird anhand der ersten vier Bits des empfangenen K2-Bytes die vorhandene Fehlschaltung festgestellt und am Ausgang 360 der Überwachungsvorrichtung 36 gemeldet. Der Umschalter 33 wird in seinen Ruhezustand überführt. Das K2-Byte wird aktualisiert.

### Schritt 8:

Die Ersatzstrecke ist repariert. In Endstelle 1 wird das Ende des Ausfalls festgestellt. Der Umschalter 13 wird aktiviert und das K2-Byte aktualisiert.

### Schritt 9:

Endstelle 3 stellt die Beendigung der Fehlschaltung fest, aktiviert den Umschalter und aktualisiert das K2-Byte.

### Schritt 10:

In der Endstelle 1 wird die Anforderung zur Zwangsumschaltung für die Betriebsstrecke gelöscht. Endstelle 1 stellt die Löschung der örtlichen Aufforderung fest und geht in den Zustand "Warte auf Rückschaltung auf die Betriebsstrecke" über und aktualisiert das K1-Byte.

### Schritt 11:

In Endstelle 1 ist der Zustand "Warte auf Rückschaltung" beendet. In der Endstelle 1 liegen keine örtlichen Anforderungen vor. Das K1-Byte wird aktualisiert.

### Schritt 12:

Die Betriebsstrecke ist repariert. Endstelle 3 stellt die Löschung der örtlichen Aufforderung fest und geht in den Zustand "Warte auf Rückschaltung auf die Betriebsstrecke" über und aktualisiert das K1-Byte.

### Schritt 13:

In Endstelle 3 ist der Zustand "Warte auf Rückschaltung" beendet. Endstelle 3 ist im anforderungsfreien Zustand, überführt den Umschalter 33 in seine Ruhestellung und aktualisiert das K1- und K2-Byte.

### Schritt 14:

In Endstelle 1 liegt weder eine örtliche noch eine entfernte Anforderung vor. Der Umschalter 13 wird in den Ruhezustand überführt und das K2-Byte aktualisiert.

Liegt auf der Ersatzstrecke 22 eine Signalunterbrechung vor, so wird der Umschalter 13 bzw. 33 in seinen Ruhezustand überführt, obwohl eine Zwangsumschaltung auf die Ersatzstrecke wirksam ist.

In dem in der Tabelle gezeigten Beispiel wird in der Endstelle 3 auf der Betriebsstrecke 21 eine Übertragungsstörung festgestellt. Folglich aktiviert die in der Überwachungsvorrichtung 36 enthaltene Ersatzschaltelogik der Endstelle 3 den Umschalter 33, um Nutzsignale von der Ersatzstrecke 22 zu empfangen. Die Ersatzschaltelogik der Überwachungsschaltung 16 von Endstelle 1 stellt den Ausfall über das empfangene K1-Byte fest und aktiviert ebenfalls den ihr zugeordneten Umschalter 13, fügt aber keine Anforderung in das ausgesendete K1-Byte ein.

Die Zwangsumschaltung auf die Ersatzstrecke, die daraufhin in der Endstelle 1 vorgenommen wird, wird in dem von der Endstelle 1 ausgesendeten K1-Byte angegeben. Sie verändert die Position des Umschalters 13 oder das ausgesendete K2-Byte nicht.

Wird daraufhin in der Endstelle 1 ein Signalausfall der Ersatzstrecke festgestellt, so wird in der Endstelle 1 der Umschalter 13 in seine Ruhestellung überführt. Dies wird im ausgesendeten K2-Byte angegeben. Das ausgesendete K1-Byte zeigt jedoch immer noch die "Zwangsumschaltung" an, da diese von höherer Priorität ist. Dies führt zum Zustand der Fehlschaltung, der in der Endstelle 3 festgestellt wird. Der Umschalter 33 der Endstelle 3 wird in seine Ruhestellung überführt und die Fehlschaltung am Ausgang 360 der Überwachungsvorrichtung 36 gemeldet. Der Zustand der Fehlschaltung endet, sobald die Ersatzstrecke 22 repariert ist.

Das Beispiel zeigt ferner die Funktion der Ersatzschalteinrichtung bei Aufhebung der Zwangsumschaltung in der Endstelle 1 und bei Reparatur der Betriebsstrecke 21. Im rückschaltenden Modus, wenn von der Ersatzstrecke empfangen wird, wird der "Warte auf Rückschaltung"-Timer einer Endstelle aktiviert, wenn dort keine örtlichen Anforderungen mehr wirksam sind. Die Vorgabe "Warte auf Rückschaltung" wird gelöscht und der Timer deaktiviert, wenn dies durch eine örtliche Anforderung vorgegeben wird. Wenn der "Warte auf Rückschaltung"-Timer in der Endstelle 3 abläuft, wird in beiden Endstellen 1 und 3 "keine Anforderung" angegeben und beide Umschalter 13 und 33 werden in ihren Ruhezustand überführt, um Nutzsignale von der Betriebsstrecke 21 zu empfangen.

Ein weiterer Fall, in dem eine Fehlschaltung vorkommen kann liegt vor, wenn in beiden Endstellen quasi gleichzeitig lokale Ersatzschalteanforderungen gleicher Priorität aber für unterschiedliche Strecken auftreten. Aufgrund der lokalen Anforderungen ergeben sich zunächst unterschiedliche Schalterstellungen, d.h. eine Fehlschaltung. Da hinzukommende Schaltanforderungen gleicher Priorität keine Veränderung der Schalterstellung bewirken, bleibt die Fehlschaltung zunächst bestehen, auch nachdem die Schaltanforderungen der fernen Enden empfangen wurden. Die Fehlschaltung wird jedoch dadurch beseitigt, daß die Fehlschaltung erkannt und die Endstelle, die das Nutzsignal über die Ersatzstrecke empfängt, auf die Betriebsstrecke umschaltet.

Man kann die zentrale Überwachungsvorrichtung 16 bzw. 33 jeweils so ausbilden, daß sie wahlweise eine bidirektionale oder eine unidirektionale 1 + 1 - Umschaltung herbeiführen kann. In diesem Fall ist es zweckmäßig, bei der unidirektionalen Umschaltung das K1-Byte dazu zu benutzen, die andere Endstelle über die örtliche Aktion zu informieren. Das fünfte Bit des K2-Bytes ist dabei auf Null gesetzt. Die ersten vier Bits des K2-Bytes können optional benutzt werden, um die andere Endstelle wie bei der bidirektionalen Ersatzschaltung über die Position des Umschalters zu informieren.

Lediglich geringfügige Ergänzungen sind erforderlich, um dieses Protokoll für bidirektionalen Betrieb in der beschriebenen Weise zu adaptieren. Dies ist vorteilhaft, wenn sowohl unidirektionale als auch bidirektionale Schemata implementiert werden sollen.

Bei den in den Figuren 1 bis 3 gezeigten Ausführungsbeispielen ist die zentrale Überwachungseinrichtung 16 bzw. 36 jeweils an die beiden optischen Empfänger 15, 19 bzw. 35, 39 der betreffenden Betriebsstelle 1 oder 3 angeschlossen, die jeweils eine Einrichtung zur Überwachung der Übertragungsqualität der betreffenden Strecke enthalten und Signalausfall oder eine Verschlechterung der Übertragungsqualität an die zentrale Überwachungsvorrichtung 16 bzw. 36 melden. Davon abweichend kann es zweckmäßig sein, Empfänger ohne derartige Überwachungseinrichtungen zu verwenden und die genannten Meldungen aus den Digitalsignalen zu gewinnen, die den Demultiplexern 13, 43 bzw. 32, 52 zugeführt werden.

## Patentansprüche

1. Verfahren zur Ersatzschaltung für eine Übertragungseinrichtung zur bidirektionalen Übertragung von Digitalsignalen, bei der zwei Endstellen (1, 3) eines Übertragungsabschnittes, die jeweils eine Sendevorrichtung (Multiplexer 11, 31) enthalten und über eine Betriebsstrecke (21) und eine Ersatzstrecke (22) miteinander verbunden sind und jeweils eine Überwachungsvorrichtung (16, 36) zur Feststellung von Übertragungsstörungen enthalten, wobei eine durch die Überwachungsvorrichtung (16, 36) steuerbare Schaltvorrichtung (13, 33) in einem ersten Schaltzustand eine Empfangsvorrichtung (Demultiplexer 12, 32) mit der Betriebsstrecke (21) und in einem zweiten Schaltzustand mit der Ersatzstrecke (22) verbindet, zwischen den Überwachungsvorrichtungen (16, 36) der beiden Endstellen (1, 3) Steuerinformationen (K1, K2) erster und zweiter Art austauschbar sind, die ausgesendete Steuerinformation (K1) erster Art eine Information über die örtlichen Steuerkriterien enthält, und die Schaltvorrichtung (13, 33) jeweils durch die örtliche Überwachungsvorrichtung (16, 36) in Abhängigkeit von örtlichen und in den empfangenen Steuerinformationen (K1, K2) enthaltenen Steuerkriterien mittels Steuersignalen derart steuerbar ist, daß die Digitalsignale wahlweise über die Betriebsstrecke (21) oder die Ersatzstrecke (22) zur Empfangsvorrichtung (Demultiplexer 12) gelangen,
**dadurch gekennzeichnet,**
daß sowohl die örtlichen als auch die in den empfangenen Steuerinformationen (K1) erster Art enthaltenen Steuerkriterien der entfernten Endstelle (3, 1) bei der Bildung der Steuersignale als gleichwertige Schaltanforderungen durch die Überwachungsvorrichtung (16, 36) behandelt werden und nur entsprechend der die höchste Priorität aufweisenden Schalt anforderung die Schaltvorrichtung (13, 33) betätigt, daß die ausgesendete Steuerinformation (K2) zweiter Art eine Information über den Zustand der örtlichen Schaltvorrichtung (13, 33) enthält und daß durch die Überwachungsvorrichtung (16, 36) bei Nichtübereinstimmung von örtlich gebildeter und empfangener Steuerinformation (K2) zweiter Art und im zweiten Zustand befindlicher örtlicher Schaltvorrichtung (13, 33) die örtliche Schaltvorrichtung (13, 33) in den ersten Zustand überführt wird.

2. Ersatzschalteinrichtung für eine Übertragungseinrichtung zur bidirektionalen Übertragung von Digitalsignalen, bei der zwei Endstellen (1, 3) eines Übertragungsabschnittes, die jeweils eine Sendevorrichtung (Multiplexer 11, 31) enthalten und über eine Betriebsstrecke (21) und eine Ersatzstrecke (22) miteinander verbunden sind und jeweils eine Überwachungsvorrichtung (16, 36) zur Feststellung von Übertragungsstörungen enthalten, wobei eine durch die Überwachungsvorrichtung (16, 36) steuerbare Schaltvorrichtung (13, 33) in einem ersten Schaltzustand eine Empfangsvorrichtung (Demultiplexer 12, 32) mit der Betriebsstrecke (21) und in einem zweiten Schaltzustand mit der Ersatzstrecke (22) verbindet, zwischen den Überwachungsvorrichtungen (16, 36) der beiden Endstellen (1, 3) Steuerinformationen (K1, K2) erster und zweiter Art austauschbar sind, die ausgesendete Steuerinformation (K1) erster Art eine Information über die örtlichen Steuerkriterien enthält, und die Schaltvorrichtung (13, 33) jeweils durch die örtliche Überwachungsvorrichtung (16, 36) in Abhängigkeit von örtlichen und in den empfangenen Steuerinformationen (K1, K2) enthaltenen Steuerkriterien mittels Steuersignalen derart steuerbar ist, daß die Digitalsignale wahlweise über die Betriebsstrecke (21) oder die Ersatzstrecke (22) zur Empfangsvorrichtung (Demultiplexer 12) gelangen, zur Durchführung des Verfahrens nach Anspruch 1,
**dadurch gekennzeichnet,**
daß die Überwachungsvorrichtung (16, 36) derart gestaltet ist, daß sowohl die örtlichen als auch die in den empfangenen Steuerinformationen (K1) erster Art enthaltenen Steuerkriterien der entfernten Endstelle (3, 1) bei der Bildung der Steuersignale als gleichwertige Schaltanforderungen behandelt und nur entsprechend der die höchste Priorität aufweisenden Schaltanforderung die Schaltvorrichtung (13, 33) betätigt und daß die ausgesendete Steuerinformation (K2) zweiter Art eine Information über den Zustand der örtlichen Schaltvorrichtung (13, 33) enthält und daß die Überwachungsvorrichtung (16, 36) bei Nichtübereinstimmung von örtlich gebildeter und empfangener Steuerinformation (K2) zweiter Art und im zweiten Zustand befindlicher örtlicher Schaltvorrichtung (13, 33) die örtliche Schaltvorrichtung (13, 33) in den ersten Zustand überführt.

3. Ersatzschalteinrichtung nach Anspruch 2,
**dadurch gekennzeichnet,**
daß die Endstellen (1, 3) jeweils zusätzlich zu der am Eingang der Empfangsvorrichtung (Demultiplexer 12, 32) liegenden Schaltvorrichtung (13, 33) eine weitere, die Ersatzstrecke (22) wahlweise mit dem Ausgang der Sendevorrichtung (Multiplexer 11, 31) verbindende Schaltvorrichtung (180, 380) enthaiten und daß die beiden Schaltvorrichtungen (13, 33 bzw. 180, 380) von ein und derselben Betriebsstelle (1 bzw. 3) jeweils gemeinsam gesteuert werden.

4. Ersatzschalteinrichtung nach Anspruch 3,
**dadurch gekennzeichnet,**
daß die weitere Schaltvorrichtung (180, 380) derart gestaltet ist, daß die Ersatzstrecke (22) wahlweise mit dem Ausgang der Sendevorrichtung (Multiplexer 11, 31) oder mit dem Ausgang einer weiteren Sendevorrichtung (41, 51) verbunden ist und daß der Eingang einer weiteren Empfangsvorrichtung (Demultiplexer 42, 52) jeweils über eine weitere Schaltvorrichtung (43, 53) mit der Ersatzstrecke (22) wahlweise verbunden ist.

5. Ersatzschalteinrichtung nach einem der Ansprüche 2 bis 4,
**dadurch gekennzeichnet,**
daß die Übertragungseinrichtung zur bidirektionalen Übertragung von Digitalsignalen jeweils sendeseitig eine Vorrichtung zum periodischen Aussenden der Steuerinformation (K1, K2) erster und zweiter Art und empfangsseitig eine Vorrichtung zur Umwandlung der periodisch empfangenen Steuerinformation in Dauersignale enthält.

6. Ersatzschalteinrichtung nach einem der Ansprüche 2 bis 5,
**dadurch gekennzeichnet,**
daß die Überwachungsvorrichtung (16, 36) bei Nichtübereinstimmung von örtlich gebildeter und empfangener Steuerinformation (K2) zweiter Art und durch die im zweiten Zustand befindliche Schaltvorrichtung (13, 33 bzw. 130, 330) eine Meldung über die auf diese Weise festgestellte Fehlschaltung abgibt und nach Beseitigung der Fehlschaltung die Meldung solange aufrechterhält, wie die Nichtübereinstimmung bestehen bleibt.

7. Ersatzschalteinrichtung nach einem der Ansprüche 2 bis 6,
**dadurch gekennzeichnet,**
daß die Nichtübereinstimmung von örtlich gebildeter und empfangener Steuerinformation (K2) zweiter Art erst nach Ablauf einer vorgegebenen Wartezeit festgestellt wird.

8. Ersatzschalteinrichtung nach einem der Ansprüche 2 bis 7,
**dadurch gekennzeichnet,**
daß die Übertragungseinrichtung zur bidirektionalen Übertragung von Digitalsignalen eine Übertragungseinrichtung der synchronen digitalen Hierarchie ist und daß die Steuerinformation erster Art als K1-Byte und die Steuerinformation zweiter Art als K2-Byte des Overhead übertragbar ist.

9. Ersatzschalteinrichtung nach Anspruch 8,
**dadurch gekennzeichnet,**
daß die ersten vier Bits des K1-Bytes eine Information über den Zustand der Übertragungsstrecke, den Betriebszustand der Ersatzschaltvorrichtung oder externe Steuerbefehle und die letzten vier Bits eine Information über die dazugehörende Strecke (21, 22) enthalten.

10. Ersatzschalteinrichtung nach Anspruch 8,
**dadurch gekennzeichnet,**
daß die ersten vier Bits des K2-Bytes eine Information über den Zustand der Schaltvorrichtung (13, 33) bzw. der Schaltvorrichtungen (13, 33 und 130, 330) enthalten.

## Claims

1. Method for changeover to standby for a transmission device for the bidirectional transmission of digital signals in which two terminals (1, 3) of a transmission section which in each case contain a transmitting device (multiplexer 11, 31) and are connected to one another via an operating link (21) and a standby link (22) and in each case contain a monitoring device (16, 36) for detecting transmission faults, a switching device (13, 33), which is controllable by the monitoring device (16, 36), connecting a receiving device (demultiplexer 12, 32) to the operating link (21) in a first switching state and to the standby link (22) in a second switching state, control information (K1, K2) of the first and second type being exchangeable between the monitoring devices (16, 36) of the two terminals (1, 3), the control information (K1) of the first type sent out containing an information item on the local control criteria and the switching device (13, 33) in each case being controllable by means of control signals by the local monitoring device (16, 36) in dependence on local control criteria and on control criteria contained in the received control information (K1, K2), in such a manner that digital signals are optionally passed to the receiving device (demultiplexer 12) via the operating link (21) or the standby link (22), characterized in that both the local control criteria and the control criteria of the remote terminal (3, 1) contained in the received control information (K1) of the first type are treated as equivalent switching requests by the monitoring device (16, 36) when the control signals are formed, and the switching device (13, 33) is only operated in accordance with the switching request having the highest priority in that the control information (K2) of the second type sent out contains an information item on the state of the local switching device (13, 33) and in that the local switching device (13, 33) is moved to its first state by the monitoring device (16, 36) in the case of a mismatch between locally formed control information and received control information (K2) of the second type and if the local switching device (13, 33) is in the second state.

2. Changeover device for a transmission device for the bidirectional transmission of digital signals in which two terminals (1, 3) of a transmission section, which contain in each case a transmitting device (multiplexer 11, 31) and are connected to one another via an operating link (21) and a standby link (22) and in each case contain a monitoring device (16, 36) for detecting transmission faults, a switching device (13, 33), which can be controlled by the monitoring device (16, 36), connecting a receiving device (demultiplexer 12, 32) to the operating link (21) in a first switching state and to the standby link (22) in a second switching state, control information (K1, K2) of the first and second type being exchangeable between the monitoring devices (16, 36) of the two terminals (1, 3), the control information (K1) of the first type sent out containing an information item on the local control criteria and the switching device (13, 33) in each case being controllable by means of control signals by the local monitoring device (16, 36) in dependence on local control criteria and on control criteria contained in the received control information (K1, K2), in such a manner that the digital signals pass optionally via the operating link (21) or the standby link (22) to the receiving device (demultiplexer 12), for carrying out the method according to Claim 1, characterized in that the monitoring device (16, 36) is designed in such a manner that both the local control criteria and the control criteria of the remote terminal (3, 1) contained in the received control information (K1) of the first type are treated as equivalent switching requests when the control signals are formed and the switching device (13, 33) is only operated in accordance with the switching request having the highest priority, and in that the control information (K2) of the second type sent out contains an information item on the state of the local switching device (13, 33) and in that the monitoring device (16, 36), in the case of a mismatch between locally formed control information and received control information (K2) of the second type and with the local switching device (13, 33) being in its second state, moves the local switching device (13, 33) to the first state.

3. Changeover device according to Claim 2, characterized in that the terminals (1, 3) in each case contain, in addition to the switching device (13, 33) located at the input of the receiving device (demultiplexer 12, 32), a further switching device (180, 380) optionally connecting the standby link (22) to the output of the transmitting device (multiplexer 11, 31), and in that the two switching devices (13, 33 and 180, 380, respectively) of one and the same operating station (1 or, respectively, 3) are in each case jointly controlled.

4. Changeover device according to Claim 3, characterized in that the further switching device (180, 380) is designed in such a manner that the standby link (22) is optionally connected to the output of the transmitting device (multiplexer 11, 31) or to the output of a further transmitting device (41, 51) and in that the input of a further receiving device (demultiplexer 42, 52) in each case can be optionally connected to the standby link (22) via a further switching device (43, 53).

5. Changeover device according to one of Claims 2 to 4, characterized in that the transmission device for the bidirectional transmission of digital signals in each case contains a device for the periodic sending-out of the control information (K1, K2) of the first and second type at the transmitting end and a device for converting the periodically received control information into continuous signals at the receiving end.

6. Changeover device according to one of Claims 2 to 5, characterized in that the monitoring device (16, 36), in the case of a mismatch between locally formed control information and received control information (K2) of the second type and due to the switching device (13, 33 or, respectively, 130, 330) being in its second state, outputs a message on the switching fault detected in this manner and, after the switching fault has been eliminated, maintains the message for as long as the mismatch continues to exist.

7. Changeover device according to one of Claims 2 to 6, characterized in that the mismatch between locally formed control information and received control information (K2) of the second type is only detected after a predetermined waiting time has elapsed.

8. Changeover device according to one of Claims 2 to 7, characterized in that the transmission device for the bidirectional transmission of digital signals is a transmission device of the synchronous digital hierarchy, and in that the control information of the first type can be transmitted as K1 byte and the control information of the second type can be transmitted as K2 byte of the overhead.

9. Changeover device according to Claim 8, characterized in that the first four bits of the K1 byte contain an information item on the state of the transmission link, the operating state of the changeover device or external control commands, and the last four bits contain an information item on the associated link (21, 22).

10. Changeover device according to Claim 8, characterized in that the first four bits of the K2 byte contain an information item on the state of the switching device (13, 33) or the switching devices (13, 33 and 130, 330), respectively.

## Revendications

1. Procédé de commutation de secours pour un dispositif de transmission destiné à la transmission bidirectionnelle de signaux numériques, dans lequel deux stations terminales (1, 3) d'une section de transmission comportent chacune un dispositif émetteur (multiplexeur 11, 31) et sont reliées par l'intermédiaire d'une voie de service (21) et d'une voie de secours (22) et comportent chacune un dispositif de surveillance (16, 36) pour constater des perturbations de transmission, un élément commutateur (13, 33) qui peut être commandé par le dispositif de surveillance (16, 36) reliant un dispositif récepteur (démultiplexeur 12, 32) à la voie de service (21) dans un premier état de commutation et à la voie de secours (22) dans un deuxième état de commutation, des informations de commande du premier et du deuxième types (K1, K2) pouvant être échangées entre les dispositifs de surveillance (16, 36) des stations terminales (1, 3), l'information de commande du premier type (K1) émise contenant une information sur les critères de commande locaux, l'élément commutateur (13, 33) pouvant être commandé par le dispositif de surveillance local (16, 36) au moyen de signaux de commande en fonction de critères de commande locaux et de critères de commande contenus dans les informations de commande (K1, K2) reçues de telle sorte que les signaux numériques arrivent au dispositif récepteur (démultiplexeur 12) au choix par l'intermédiaire de la voie de service (21) ou de la voie de secours (22),
caractérisé par le fait que
aussi bien les critères de commande locaux que les critères de commande, contenus dans les informations de commande du premier type (K1) reçues, de la station terminale distante (3, 1) sont traités par le dispositif de surveillance (16, 36) lors de la formation des signaux de commande comme des demandes de commutation de même valeur et l'élément commutateur (13, 33) est actionné seulement en fonction de la demande de commutation ayant la plus grande priorité, l'information de commande du deuxième type (K2) émise contient une information sur l'état de l'élément commutateur local (13, 33) et l'élément commutateur local (13, 33) est mis dans le premier état par le dispositif de surveillance (16, 36) lors de la non-concordance entre l'information de commande du deuxième type (K2) formée localement et reçue et l'élément commutateur local (13, 33) se trouvant dans le deuxième état.

2. Dispositif de commutation de secours pour un dispositif de transmission destiné à la transmission bidirectionnelle de signaux numériques, dans lequel deux stations terminales (1, 3) d'une section de transmission comportent chacune un dispositif émetteur (multiplexeur 11, 31) et sont reliées par l'intermédiaire d'une voie de service (21) et d'une voie de secours (22) et comportent chacune un dispositif de surveillance (16, 36) pour constater des perturbations de transmission, un élément commutateur (13, 33) qui peut être commandé par le dispositif de surveillance (16, 36) reliant un dispositif récepteur (démultiplexeur 12, 32) à la voie de service (21) dans un premier état de commutation et à la voie de secours (22) dans un deuxième état de commutation, des informations de commande du premier et du deuxième types (K1, K2) pouvant être échangées entre les dispositifs de surveillance (16, 36) des stations terminales (1, 3), l'information de commande du premier type (K1) émise contenant une information sur les critères de commande locaux, l'élément commutateur (13, 33) pouvant être commandé par le dispositif de surveillance local (16, 36) au moyen de signaux de commande en fonction de critères de commande locaux et de critères de commande contenus dans les informations de commande (K1, K2) reçues de telle sorte que les signaux numériques arrivent au dispositif récepteur (démultiplexeur 12) au choix par l'intermédiaire de la voie de service (21) ou de la voie de secours (22), pour la mise en oeuvre du procédé selon la revendication 1,
caractérisé par le fait que
le dispositif de surveillance (16, 36) est conçu de telle sorte que, aussi bien les critères de commande locaux que les critères de commande, contenus dans les informations de commande du premier type (K1) reçues, de la station terminale distante (3, 1) sont traités par le dispositif de surveillance (16, 36) lors de la formation des signaux de commande comme des demandes de commutation de même valeur et l'élément commutateur (13, 33) est actionné seulement en fonction de la demande de commutation ayant la plus grande priorité, l'information de commande du deuxième type (K2) émise contient une information sur l'état de l'élément commutateur local (13, 33) et l'élément commutateur local (13, 33) est mis dans le premier état par le dispositif de surveillance (16, 36) lors de la non-concordance entre l'information de commande du deuxième type (K2) formée localement et reçue et l'élément commutateur local (13, 33) se trouvant dans le deuxième état.

3. Dispositif de commutation de secours selon la revendication 2,
caractérisé par le fait que
les stations terminales (1, 3) comportent chacune en plus de l'élément commutateur (13, 33) se trouvant à l'entrée du dispositif récepteur (démultiplexeur 12, 32) un autre élément commutateur (180, 380) reliant au choix la voie de secours (22) à la sortie au dispositif émetteur (multiplexeur 11, 31) et les deux éléments commutateurs (13, 33 ou 180, 380) sont commandés à chaque fois conjointement par une seule et même station terminale (1 ou 3).

4. Dispositif de commutation de secours selon la revendication 3,
caractérisé par le fait que
l'autre élément commutateur (180, 380) est conçu de telle sorte que la voie de secours (22) est reliée sélectivement à la sortie du dispositif émetteur (multiplexeur 11, 31) ou à la sortie d'un autre dispositif émetteur (41, 51) et l'entrée d'un autre dispositif récepteur (démultiplexeur 42, 52) est reliée à chaque fois sélectivement par l'intermédiaire d'un autre élément commutateur (43, 53) à la voie de secours (22).

5. Dispositif de commutation de secours selon l'une des revendications 2 à 4,
caractérisé par le fait que
le dispositif de transmission destiné à la transmission bidirectionnelle de signaux numériques contient côté émetteur un dispositif pour l'émission périodique de l'information de commande du premier et du deuxième types (K1, K2) et côté récepteur un dispositif pour la transformation de l'information de commande reçue périodiquement en signaux permanents.

6. Dispositif de commutation de secours selon l'une des revendications 2 à 5,
caractérisé par le fait que
le dispositif de surveillance (16, 36) fournit, lors de la non-concordance entre l'information de commande du deuxième type (K2) formée localement et reçue et l'élément commutateur local (13, 33 ou 130, 330) se trouvant dans le deuxième état, un message sur la mauvaise commutation détectée de cette manière et conserve le message après l'élimination de la mauvaise commutation tant que la non-concordance reste existante.

7. Dispositif de commutation de secours selon l'une des revendications 2 à 6,
caractérisé par le fait que
la non-concordance de l'information de commande du deuxième type (K2) formée localement et reçue est détectée seulement après l'écoulement d'un temps d'attente prédéterminé.

8. Dispositif de commutation de secours selon l'une des revendications 2 à 7,
caractérisé par le fait que
le dispositif de transmission destiné à la transmission bidirectionnelle de signaux numériques est un dispositif de transmission de la hiérarchie numérique synchrone et l'information de commande du premier type peut être transmise sous forme d'octet K1 et l'information de commande du deuxième type sous forme d'octet K2 de l'Overhead.

9. Dispositif de commutation de secours selon la revendication 8,
caractérisé par le fait que
les quatre premiers bits de l'octet K1 contiennent une information sur l'état de la voie de transmission, sur l'état de fonctionnement du dispositif de commutation de secours ou sur des instructions de commande externes et les quatre derniers bits contiennent une information sur la voie associée (21, 22).

10. Dispositif de commutation de secours selon la revendication 8,
caractérisé par le fait que
les quatre premiers bits de l'octet K2 contiennent une information sur l'état de l'élément commutateur (13, 33) ou des éléments commutateurs (13, 33 et 130, 330).
